# EUROPÄISCHE PATENTSCHRIFT

(11) **EP 0 890 175 B1**
(45) Veröffentlichungstag und Bekanntmachung des Hinweises auf die Patenterteilung: **28.06.2000**
(21) Anmeldenummer: 97908250.0
(22) Anmeldetag: 17.03.1997
(51) Int. Cl.: G21C 15/18

(54) **VERFAHREN UND VORRICHTUNG ZUR ABSICHERUNG DER NACHWÄRMEABFUHR AUS EINEM REAKTOR EINES KERNKRAFTWERKES**
METHOD AND DEVICE FOR MAKING SAFE THE DISCHARGE OF RESIDUAL HEAT FROM A NUCLEAR POWER PLANT REACTOR
PROCEDE ET DISPOSITIF GARANTISSANT DE BONNES CONDITIONS DE SECURITE LORS DE L'EVACUATION DE CHALEUR RESIDUELLE DEGAGEE DU REACTEUR D'UNE CENTRALE NUCLEAIRE

(30) Priorität: 25.03.1996 DE 19611703
(43) Veröffentlichungstag der Anmeldung: 13.01.1999
(73) Patentinhaber: SIEMENS AKTIENGESELLSCHAFT, 80333 München (DE)
(72) Erfinder: HARTMANN, Heinz-Werner, D-91054 Buckenhof (DE); MACKERT, Pius, D-91058 Erlangen (DE)
(86) Internationale Anmeldenummer: EP9701334
(87) Internationale Veröffentlichungsnummer: WO9736302

(56) Entgegenhaltungen:
- US-A- 5 268 943
- PATENT ABSTRACTS OF JAPAN vol. 013, no. 284 (P-892), 29.Juni 1989 & JP 01 072096 A (HITACHI LTD), 16.März 1989,
- PATENT ABSTRACTS OF JAPAN vol. 015, no. 136 (P-1187), 4.April 1991 & JP 03 017598 A (TOSHIBA CORP), 25.Januar 1991,
- PATENT ABSTRACTS OF JAPAN vol. 013, no. 256 (P-884), 14.Juni 1989 & JP 01 053194 A (NIPPON ATOM IND GROUP CO LTD;OTHERS: 01), 1.März 1989,
- PATENT ABSTRACTS OF JAPAN vol. 014, no. 462 (P-1113), 5.Oktober 1990 & JP 02 183198 A (JAPAN ATOM ENERGY RES INST), 17.Juli 1990,

## Beschreibung

Die Erfindung betrifft zunächst ein Verfahren zur Absicherung der Nachwärmeabfuhr aus einem Reaktor eines Kernkraftwerkes bei gesenktem Füllstand im Primärkreislauf des Reaktorkühlsystems. Insbesondere soll das Verfahren bei Reinigungs- und Wartungsvorgängen in Kernkraftwerken mit Druckwasserreaktor eingesetzt werden. Außerdem betrifft die Erfindung auch eine Vorrichtung zur Absicherung der Nachwärmeabfuhr aus einem Reaktor eines Kernkraftwerkes.

Bei Kernkraftwerken, insbesondere solchen mit Druckwasserreaktoren westlicher Bauart und Betriebsweise, erfolgt die sogenannte Nachwärmeabfuhr unterhalb bestimmter Druck- und Temperaturzustände im Reaktorkühlsystem über die Primärseite des Kühlsystems. Werden Wartungs- und Reinigungsvorgänge im Reaktor eingeleitet, dann werden bei Verfahren nach dem Stand der Technik folgende Verfahrensschritte durchgeführt:
- Zunächst wird der Reaktor abgeschaltet und zugewartet, bis sich die Kühlflüssigkeit im Primärkreislauf abgekühlt hat. Außerdem wird der Druck im Kühlsystem reduziert.
- Sodann wird der Füllstand des Primärkreislaufes auf etwa Mitte-Loop-Niveau der HKM-Leitung (Hauptkühlmittel-Leitung) abgesenkt, wobei ein Nachkühlsystem eingeschaltet wird, das die Wärmeabfuhr aus dem Primärkreislauf übernimmt, die in diesem geöffneten und abgesenkten Zustand nicht mehr durch die Dampferzeugeranlage gegeben ist, die ansonsten beim Betrieb des Kernkraftwerkes an den Primärkreislauf angeschlossen ist.
- Sodann wird bei Kernkraftwerken der in Frage stehenden Art in der Regel ein Kühlmittelreservoir zur bedarfsweisen Nachfüllung des Primärkreislaufes des abgeschalteten Reaktors und/oder des Nachkühlsystems vorgesehen. Dabei kann es sich um einen Borwasserlagertank handeln, der innerhalb des Reaktorcontainments vorgesehen ist und die Bezeichnung "IRWST" (Incontainment Refulling Water Storage Tank) hat. Ein solches Kühlmittelreservoir dient in der Regel dazu, die Räume über dem geöffneten Reaktor soweit auf das Niveau des Brennelementlagerbeckens zu fluten, daß unterhalb der Flüssigkeitsoberfläche die Brennelemente gewechselt werden können. Bei europäischen Reaktoren neuerer Bauart (EPR-European Pressurized Reaktor) ist das Kühlmittelreservoir als "Incontainment-System" vorgesehen.

Eine derartige Notkühlanlage mit einem Kühlmittelreservoir ist aus dem Lexikon der Kern- und Reaktortechnik, Franckh'sche Verlagshandlung, W. Keller & Co., Stuttgart, 1959, Seiten 142 bis 144, zu entnehmen.

Aus der US 5,268,943 ist ebenfalls ein Notkühlsystem bekannt, das einen Wassertank umfaßt. Von diesem Wassertank ausgehend, kann bei Bedarf Kühlwasser in den Kreislauf eines Kernreaktors eingespeist werden. Der Tank kann darüber hinaus, dann, wenn genügend Wasser im Kreislauf vorhanden ist, aus diesem wieder aufgefüllt werden.

Während der gesamten Phase der Wartungsarbeiten, bei denen der Füllstand im Reaktorkühlsystem abgesenkt ist, kann die für die Sicherheit eines Kernkraftwerkes sehr wichtige Nachwärmeabfuhr durch Systemfehler empfindlich gestört werden. Eine der diesbezüglich möglichen Störungen ist eine unbeabsichtigte übermäßige Absenkung des Füllstandes, was zu einem Totalausfall der Nachkühlung bei relativ hoher Nachzerfallsleistung des Reaktors führen kann. In einem solchen Fall ziehen die Nachkühlpumpen des eingeschalteten Kühlsystems Luft, so daß es zu einer Blasenbildung im Kühlsystem kommen kann, wodurch die Kühlleistung rapide abfällt.

Bei der Durchführung von Wartungsarbeiten wird neben einem drucklosen Zustand das Kühlsystem außerdem zur Kühlmittelentgasung bei abgesenktem Füllstand evakuiert. Dadurch sind bei abgesenktem Füllstand im Reaktorkühlsystem und an den daran angeschlossenen Kühlsystemen zwei unterschiedliche Druckzustände zu betrachten, die die Eindämmung und Behebung von Störungen weiter verkomplizieren.

Der Erfindung liegt die Aufgabe zugrunde, ein Verfahren sowie eine Vorrichtung zur Absicherung der Nachwärmeabfuhr aus einem Reaktor eines Kernkraftwerkes anzugeben, das bzw. die im Falle von unzulässigen Füllstandsabsenkungen im Nachkühlkreislauf bei unterschiedlichen Druckzuständen ein Trockengehen des Nachkühlkreislaufes verhindert. Diese Aufgabe wird durch die Kombination der Merkmale des Patentanspruchs 1 gelöst, soweit es sich um das Verfahren handelt bzw. durch die Merkmalskombination des Patentanspruchs 9 gelöst, soweit die erfindungsgemäße Vorrichtung angesprochen ist.

Als Kern der Erfindung wird es angesehen, das Kühlmittelreservoir über eine zusätzliche, mit einer Absperrarmatur und einer über eine Vorsteuerarmatur gesteuerte Rückschlagarmatur versehene Sicherheitsflutleitung mit der saugseitigen Anschlußleitung des Nachkühlsystems zu verbinden, die Absperrarmatur in der Sicherheitsflutleitung im Zuge der Füllstandsabsenkung zu öffnen und bei drucklosem Reaktorkühlsystem abhängig von den geodätischen Höhenverhältnissen, d.h. von den Füllständen im Kühlmittelreservoir einerseits und dem Füllstand in der Saugleitung andererseits bzw. auch abhängig von der Schließkraft der Rückschlagarmatur beim Absenken des Füllstandes in der Saugleitung unter einem vorgebbaren Schwellenwert unter Öffnung der Rückschlagarmatur Kühlmittel vom Kühlmittelreservoir in die Saugleitung einfließen zu lassen sowie bei zur Kühlmittelentgasung evakuiertem Reaktorkühlsystem die Schließkraft der Rückschlagarmatur durch Betätigung der Vorsteuerarmatur zu erhöhen und dadurch an die modifizierten Druckverhältnisse im evakuiertem Reaktorkühlsystem anzupassen.

Das erfindungsgemäß eingesetzte Rückschlagventil erfüllt mithin eine Dreifachfunktion. Es verhindert zum einen das Überfließen von Kühlmittel aus dem Reaktorkühlsystem in das Kühlmittelreservoir dann, wenn der Füllstand im Reaktorkühlsystem höher ist als der Füllstand des Kühlmittelreservoirs. Zum zweiten erlaubt es einen Übertritt von Kühlmittel aus dem Kühlmittelreservoir in das Reaktorkühlsystem, wenn der Flüssigkeitsdruck auf seiten des Kühlmittelreservoirs höher als auf seiten des Reaktorkühlsystems ist oder die Höhendifferenz einen vorgebbaren Schwellenwert unterschreitet, der die "normale" Schließkraft der Rückschlagarmatur überwindet. Zum dritten wird eine Erhöhung der Schließkraft der Rückschlagarmatur dann herbeigeführt, wenn das Reaktorkühlsystem zur Kühlmittelentgasung mit Vakuum beaufschlagt wird, da ansonsten eine Aufrechterhaltung des Vakuum bei unbeabsichtigt einfließendem Kühlmittel in das Reaktorkühlsystem nicht möglich wäre.

Besonders vorteilhaft ist es, wenn - wie beim EPR vorgesehen - das Flüssigkeitsreservoir als Bohrwasserlagertank innerhalb des Reaktorcontainments vorgesehen wird, da sich dann sämtliche Sicherheitsflutvorgänge innerhalb des Reaktorcontainments abspielen.

Wenn gemäß Anspruch 3 die Rückschlagarmatur als Kolbenrückschlagarmatur ausgebildet ist und die Erhöhung der Schließkraft der Rückschlagarmatur durch den auf den Steuerkolben der Rückschlagarmatur wirkenden Flüssigkeitsdruck des im Flüssigkeitsreservoir befindlichen Kühlmittels erfolgt, wird das Verfahren weiter vereinfacht, da auf komplizierte und anfällige Steuervorrichtungen verzichtet werden kann.

Die "normale" Schließkraft der Rückschlagarmatur wird im wesentlichen durch die Gewichtskraft des in ihr in Vertikalrichtung verschiebbaren Steuerkolbens und durch damit zusammenwirkende Gewichts- oder Federelemente bestimmt. Dies sind rein mechanisch wirkende und damit leicht zu beherrschende und zu dimensionierende und somit unempfindliche Bauteile.

Die erhöhte Schließkraft der Rückschlagarmatur wird durch Druckbeaufschlagung eines oberhalb des Steuerkolbens angeordneten, in Schließrichtung wirkenden Steuerraumes mit Kühlmittel bewirkt. Dazu muß lediglich die als fernsteuerbares Ventil ausgebildete Vorsteuerarmatur geöffnet werden, der Flüssigkeitsdruck des Kühlmittelreservoirs besorgt dann automatisch die Schließkrafterhöhung.

In beiden Druckzuständen, nämlich im drucklosen und im evakuierten Zustand ist die jeweils wirkende Schließkraft der Rückschlagarmatur derart bemessen, daß eine Öffnung der Rückschlagarmatur und ein Überströmen von Kühlmittel aus dem Kühlmittelreservoir über die Rückschlagarmatur in den Kühlmittelkreislauf erfolgt, bevor der Füllstand bis zum gemeinsamen Verbindungspunkt der saugseitigen Anschlußleitung und der Sicherheitsflutleitung abgesunken ist. Wäre dies nicht der Fall, würde es zur unerwünschten Blasenbildung im Bereich der Nachkühlpumpen kommen, wodurch eine sicherheitsnotwendige Nachkühlung des Reaktorkühlsystems nicht mehr gegeben wäre.

Vorteilhafterweise werden die Absperrarmatur und die Vorsteuerarmatur bei Einleitung der jeweiligen Zustände des Reaktorkühlsystems automatisch geöffnet und dadurch die Sicherheitsfunktion der Sicherheitsflutleitung aktiviert.

Die Vorrichtung zur Absicherung der Nachwärmeabfuhr sieht neben der herkömmlichen Flutleitung, durch die das Kühlmittelreservoir mit dem primärseitigen Nachkühlsystem verbunden ist, eine weitere Flutleitung, nämlich die Sicherheitsflutleitung vor, in der die fernbetätigbare Absperrarmatur und die oben bereits erwähnte Rückschlagarmatur vorgesehen sind. Die Rückschlagarmatur ist bezüglich ihrer Öffnung zum Kühlmitteldurchsatz vom Kühlmittelreservoir zur Anschlußleitung in zwei unterschiedlichen Schließkrafteinstellungen aktivierbar. Weitere vorteilhafte Merkmale betreffend die Vorrichtung ergeben sich aus den Ansprüchen 10 - 13.

Die Erfindung ist anhand eines vorteilhaften Ausführungsbeispiels in der Zeichnungsfigur näher erläutert. Diese zeigt:
eine schematische Darstellung der wesentlichen Elemente, die bei dem Verfahren und der Vorrichtung zur Absicherung der Nachwärmeabfuhr aus einem Reaktor eines Kernkraftwerkes eingesetzt werden.

Die in der Zeichnungsfigur dargestellte Vorrichtung 1 knüpft an die HKM-Leitung 2 des Primärkreislaufes des Reaktorkühlsystems 3 an und zeigt einen Strang 4 eines primärseitigen Nachkühlsystems, das eine Nachkühlpumpe/ND-Einspeisepumpe 5 aufweist, welche über saugseitige Anschlußleitung 6 an das Reaktorkühlsystem 3 angeschlossen ist. Mit Bezugsziffer 7 ist ein Kühlmittelreservoir bezeichnet, in dem Kühlmittel 8 mit einem Füllstand 9 bereitgehalten wird. Der abgesenkte Füllstand in der HKM-Leitung 2 ist mit Bezugsziffer 10 bezeichnet.

In der saugseitigen Anschlußleitung 6 ist eine Mehrzahl von motorischen Absperrventilen 11 vorgesehen, die im Zuge der Inbetriebnahme des primärseitigen Nachkühlsystems geöffnet werden.

An einem ersten Verbindungspunkt 12 mündet eine mit dem Kühlmittelreservoir 7 verbundene Flutleitung 13 in die saugseitige Anschlußleitung 6. Diese Flutleitung 13 ist durch ein weiteres Absperrventil 14 absperrbar, das zum Zwecke der Zuführung von Kühlmittel 8 aus dem Kühlmittelreservoir 7 in das Nachkühlsystem geöffnet werden kann.

Erfindungsgemäß ist nun eine Sicherheitsflutleitung 15 vorgesehen, die oberhalb der Flutleitung 13 an einem zweiten Verbindungspunkt 12' in das Kühlmittelreservoir 7 einbindet, und in der eine Absperrarmatur 16 angebracht ist, die bei Einleitung der Absenkmaßnahmen des Füllstandes im Primärkreislauf 2 geöffnet wird. Die Absperrarmatur 16 ist fernbedienbar.

Desweiteren befindet sich in der Sicherheitsflutleitung 15 eine Rückschlagarmatur 17, die aufgrund ihrer Rückschlageigenschaft einen Kühlmittelfluß in Pfeilrichtung 18 unterbindet, hingegen in Pfeilrichtung 19 unter Berücksichtigung unterschiedlicher Druckzustände zuläßt. Ein erster der Druckzustände sieht eine Öffnung und einen Kühlmittelfluß in Pfeilrichtung 19 dann vor, wenn bei drucklosem, Kühlsystem der Füllstand 10 auf einen unzulässigen Pegel abgesunken ist. Dann reicht der Flüssigkeitsdruck des Kühlmittels 8 aus, um die wirkende "normale" Schließkraft der Rückschlagarmatur 17 zu überwinden und Kühlmittel 8 in das Nachkühlsystem einzubringen.

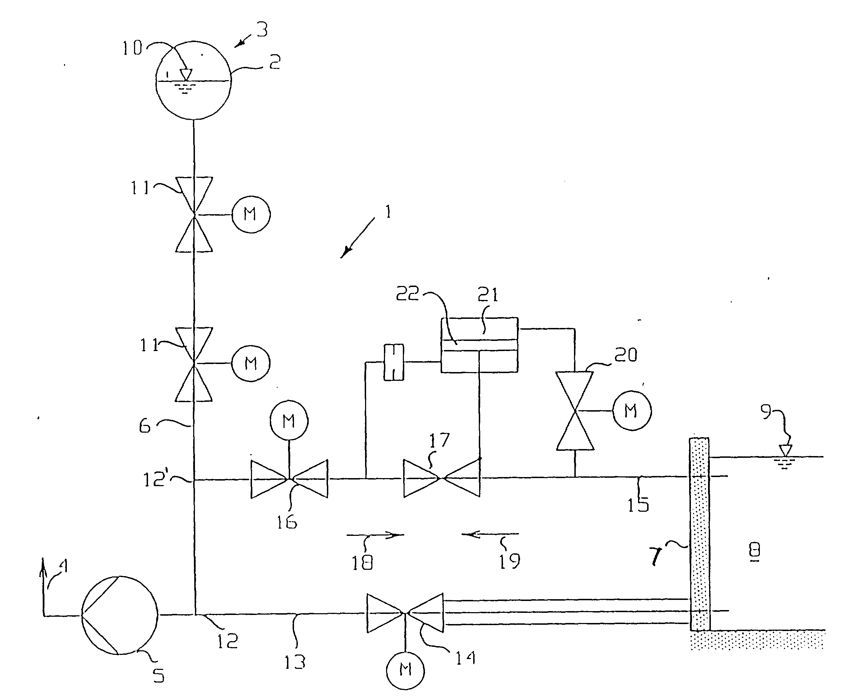

Wenn zur Kühlmittelentgasung allerdings der Primärkreislauf 2 des Reaktorkühlsystems 3 evakuiert ist, würde das Vakuum bei vorzeitiger Öffnung der Rückschlagarmatur 17 gebrochen werden, da der Druck auf der links in der Zeichnung dargestellten Leitungsseite weit geringer ist als auf der rechts dargestellten Leitungsseite. Deswegen ist eine entsprechende Schließkrafterhöhung erforderlich, die dadurch erzielt wird, daß eine Vorsteuerarmatur 20 geöffnet wird, so daß Kühlmittel 8 in den Steuerraum 21 eines Steuerkolbens 22 der Rückschlagarmatur 17 einfließt und diese in Schließrichtung belastet. Dies bedeutet, daß die Schließkraft der Rückschlagarmatur 17 vergrößert wird, so daß auch bei evakuiertem Primärkreislauf kein Kühlmittel 8 in den Primärkreislauf und das Nachkühlsystem gelangt, es sei denn, daß der Füllstand 10 auf einen vorgebbaren Wert abgesunken ist. Dann überwindet der Flüssigkeitsdruck des Kühlmittels 8 die verstärkte Schließkraft der Rückschlagarmatur 17, die Rückschlagarmatur 17 öffnet und sorgt für eine selbsttätige Flutung des Reaktorkühlsystems. In einem solchen Fall wird allerdings der Vakuumzustand nicht aufrechterhalten; dies ist ein zusätzlicher sicherheitsgerichteter Effekt, da der Siedeabstand in der saugseitigen Anschlußleitung dabei zunimmt.

Der Einsatz dieser Sicherheitseinrichtung erfolgt im Rahmen der Nachkühlprozedur, wobei die erforderlichen Maßnahmen entweder von Hand oder automatisch mit entsprechendem Sicherheitsniveau (leittechnische Überwachung und elektrische Verriegelungen) durchgeführt werden.

## Patentansprüche

1. Verfahren zur Absicherung der Nachwärmeabfuhr aus einem Reaktor eines Kernkraftwerkes bei abgesenktem Füllstand im Primärkreislauf (2) des Reaktorkühlsystems (3), insbesondere bei Reinigungs- und Wartungsvorgängen, mit folgenden Verfahrensschritten
a) Abschalten des Reaktors und Durchlaufen einer ersten Abkühlungs- und Druckreduktionsphase im Primärkreislauf (2) des Kühlsystems,
b) Einschalten eines Nachkühlsystems zur Übernahme der in diesem Zustand nicht mehr durch die Dampferzeugeranlage geleisteten Wärmeabfuhr aus dem Primärkreislauf (2)
c) komplette Druckentlastung und Absenken des Füllstands (10) des Primärkreislaufes (2) auf etwa Mitte-Loop-Niveau der HKM-Leitung;
d) Vorsehen eines Kühlmittelreservoires (7) zur bedarfsweisen Nachfüllung des Primärkreislaufes (2) des Reaktors und/oder des Nachkühlsystems,
**gekennzeichnet durch** folgende Verfahrensschritte:
e) Verbinden des Kühlmittelreservoires (7) über eine zusätzliche mit einer Absperrarmatur (16) und einer über eine Vorsteuerarmatur (20) gesteuerte Rückschlagarmatur (17) versehene Sicherheitsflutleitung (15) mit der saugseitigen Anschlußleitung (6) des Nachkühlsystems;
f) Öffnen der Absperrarmatur (16) im Zuge der Füllstandsabsenkung gemäß Verfahrensschritt c), wobei
f₁) bei drucklosem Reaktorkühlsystem (3), abhängig von den geodätischen Höhenverhältnissen (Füllstand im Kühlmittelreservoir/Füllstand in der Saugleitung) und der "normalen" Schließkraft der Rückschlagarmatur (17) beim Absenken des Füllstandes in der Saugleitung unter einen vorgebbaren Schwellenwert, unter Öffnung der Rückschlagarmatur (17) Kühlmittel vom Kühlmittelreservoir (7) in die Saugleitung fließt und
f₂) bei zur Kühlmittelentgasung evakuiertem Reaktorkühlsystem (3) die Schließkraft der Rückschlagarmatur (17) durch Betätigung der Vorsteuerarmatur (20) erhöht und dadurch an die modifizierten Druckverhältnisse im evakuiertem Reaktorkühlsystem (3) angepaßt wird.

2. Verfahren nach Anspruch 1,
**dadurch gekennzeichnet,** daß das Kühlmittel (8) aus dem als Bohrwasserlagertank ausgebildeten Flüssigkeitsreservoir innerhalb des Reaktorcontainments in den Primärkreislauf (2) einfließt.

3. Verfahren nach Anspruch 1 oder 2,
**dadurch gekennzeichnet,** daß bei evakuiertem Reaktorkühlsystem (3) die Erhöhung der Schließkraft der Rückschlagarmatur (17) durch den auf einen Steuerkolben (22) der Rückschlagarmatur (17) wirkenden Flüssigkeitsdruck des im Flüssigkeitsreservoir befindlichen Kühlmittels (8) erfolgt.

4. Verfahren nach Anspruch 3,
**dadurch gekennzeichnet,** daß die Schließkraft der Rückschlagarmatur (17) im wesentlichen durch die Gewichtskraft des in ihr in Vertikalrichtung verschiebbaren Steuerkolbens (22) oder durch damit zusammenwirkende Gewichtselemente oder Federelemente bestimmt wird.

5. Verfahren nach einem der Ansprüche 3 oder 4,
**dadurch gekennzeichnet,** daß bei Öffnung der Vorsteuerarmatur (20) die Erhöhung der Schließkraft der Rückschlagarmatur (17) durch Druckbeaufschlagung eines Steuerraumes (21) mit Kühlmittel (8) erfolgt.

6. Verfahren nach einem der vorhergehenden Ansprüche,
**dadurch gekennzeichnet,** daß die Schließkraft der Rückschlagarmatur (17) derart bemessen ist, daß eine Öffnung der Rückschlagarmatur (17) und ein Überströmen von Kühlmittel (8) aus dem Kühlmittelreservoir (7) über die Rückschlagarmatur (17) in den Kühlmittelkreislauf erfolgt, bevor der Füllstand bis zum Verbindungspunkt (VP) der saugseitigen Anschlußleitung (6) und der Sicherheitsflutleitung (15) abgesunken ist.

7. Verfahren nach einem der vorhergehenden Ansprüche,
**dadurch gekennzeichnet,** daß die Absperrarmatur (17) bei manuell eingeleiteter Absenkung des Füllstandes (10) automatisch oder manuell geöffnet wird.

8. Verfahren nach einem der vorhergehenden Ansprüche,
**dadurch gekennzeichnet,** daß bei Evakuierung des Reaktorkühlsystems (3) die Vorsteuerarmatur (20) automatisch oder manuell zur Erhöhung der Schließkraft der Rückschlagarmatur (17) aktiviert wird.

9. Vorrichtung (1) zur Absicherung der Nachwärmeabfuhr aus einem Reaktor eines Kernkraftwerkes bei abgesenktem Füllstand im Primärkreislauf (2) des Reaktorkühlsystems (3), bei welchem mindestens ein Strang (4) eines primärseitigen Nachkühlsystems vorgesehen ist das über eine saugseitige Anschlußleitung (6) an das Reaktorkühlsystem (HKM-Leitung 2) angeschlossen ist und über eine absperrbare Flutleitung (13) mit einem Kühlmittelreservoir (7) verbunden ist,
**dadurch gekennzeichnet,** daß das Kühlmittelreservoir (7)über eine zusätzliche Sicherheitsflutleitung (15) mit-der saugseitigen anschlußleitung (6) des Nachkühlsystems verbunden ist, in der eine fernbetätigbare Absperrarmatur (16) und eine Rückschlagarmatur (17) vorgesehen sind, und die Rückschlagarmatur bezüglich ihrer Öffnung zum Kühlmitteldurchsatz vom Kühlmittelreservoir (7) zur Anschlußleitung (6) in zwei unterschiedlichen Schließkraft-Einstellungen aktivierbar ist.

10. Vorrichtung nach Anspruch 9,
**dadurch gekennzeichnet,** daß die Rückschlagarmatur (17) als Kolben- Rückschlagarmatur ausgebildet ist und einen Steuerkolben (22) aufweist, dessen Wirkung das Öffnungs- und Schließverhalten der Rückschlagarmatur (17) bestimmt.

11. Vorrichtung nach Anspruch 10,
**dadurch gekennzeichnet,** daß am Steuerkolben (22) ein in Schließrichtung wirkender Steuerraum (21) vorgesehen ist, der durch Öffnung einer Vorsteuerarmatur (20) zur Schließkrafterhöhung der Rückschlagarmatur (17) mit Kühlmittel (8) beaufschlagbar ist.

## Claims

1. Method for safeguarding the discharge of residual heat from a reactor of a nuclear power station in the case of a lowered filling level in the primary circuit (2) of the reactor cooling system (3), especially during cleaning and maintenance operations, with the following method steps
a) shutting down the reactor and running through a first cooling and pressure reduction phase in the primary circuit (2) of the cooling system,
b) cutting in an aftercooling system for taking over the heat discharge from the primary circuit (2), the said heat discharge no longer being executed by the steam generator plant in this state,
c) complete pressure relief and lowering of the filling level (10) of the primary circuit (2) to about the mid-loop level of the MC conduit,
d) providing a coolant reservoir (7) for the required refilling of the primary circuit (2) of the reactor and/or of the aftercooling system,
characterized by the following method steps:
e) connecting the coolant reservoir (7) to the suction-side connecting conduit (6) of the aftercooling system via an additional safety flood conduit (15) provided with a shut-off valve (16) and with a non-return valve (17) controlled via a pilot valve (20),
f) opening the shut-off valve (16) during the lowering of the filling level according to method step c),
f₁) in the case of a pressureless reactor cooling system (3), when the filling level in the suction conduit falls below a predeterminable threshold value, by the opening of the non-return valve (17) coolant flows from the coolant reservoir (7) into the suction conduit as a function of the geodetic head ratios (filling level in the coolant reservoir/filling level in the suction conduit) and of the "normal" closing force of the non-return valve (17), and
f₂) when the reactor cooling system (3) is evacuated for coolant degassing, the closing force of the non-return valve (17) is increased by actuating the pilot valve (20) and is thereby adapted to the modified pressure conditions in the evacuated reactor cooling system (3).

2. Method according to Claim 1, characterized in that the coolant (8) from the liquid reservoir designed as a boric water storage tank flows into the primary circuit (2) within the reactor containment.

3. Method according to Claim 1 or 2, characterized in that, with the reactor cooling system (3) evacuated, the closing force of the non-return valve (17) is increased by the liquid pressure of the coolant (8) located in the liquid reservoir, the said liquid pressure acting on a control piston (22) of the non-return valve (17).

4. Method according to Claim 3, characterized in that the closing force of the non-return valve (17) is determined essentially by the weight of the control piston (22) displaceable therein in the vertical direction or by weight elements or spring elements cooperating therewith.

5. Method according to one of Claims 3 or 4, characterized in that, with the opening of the pilot valve (20), the closing force of the non-return valve (17) is increased by applying pressure to a control space (21) with coolant (8).

6. Method according to one of the preceding claims, characterized in that the closing force of the non-return valve (17) is dimensioned in such a way that opening of the non-return valve (17) and overflow of coolant (8) out of the coolant reservoir (7) via the non-return valve (17) into the coolant circuit occur before the filling level has fallen as far as the connection point (VP) of the suction-side connecting conduit (6) and of the safety flood conduit (15).

7. Method according to one of the preceding claims, characterized in that, with the lowering of the filling level (10) being initiated manually, the shut-off valve (7) is opened automatically or manually.

8. Method according to one of the preceding claims, characterized in that, during the evacuation of the reactor cooling system (3), the pilot valve (20) is activated automatically or manually in order to increase the closing force of the non-return valve (17).

9. Device (1) for safeguarding the discharge of residual heat from a reactor of a nuclear power station in the case of a lowered filling level in the primary circuit (2) of the reactor cooling system (3), in which there is provided at least one line (4) of a primary-side aftercooling system which is connected to the reactor cooling system (MC conduit 2) via a suction-side connecting conduit (6) and which is connected to a coolant reservoir (7) via a flood conduit (13) which can be shut off, characterized in that the coolant reservoir (7) is connected to the suction-side connecting conduit (6) of the aftercooling system via an additional safety flood conduit (15), in which safety flood conduit (15) a remotely actuable shut-off valve (16) and a non-return valve (17) are provided, and the opening of the non-return valve can be activated for the throughput of coolant from the coolant reservoir (7) to the connecting conduit (6) in two different closing-force settings.

10. Device according to Claim 9, characterized in that the non-return valve (17) is designed as a piston-type non-return valve and has a control piston (22), the effect of which determines the opening and closing behaviour of the non-return valve (17).

11. Device according to Claim 10, characterized in that there is provided on the control piston (22) a control space (21) which acts in the closing direction and to which coolant (8) can be applied by opening a pilot valve (20) for the purpose of increasing the closing force of the non-return valve (17).

## Revendications

1. Procédé pour garantir l'évacuation de chaleur résiduelle d'un réacteur d'une centrale nucléaire lorsque la hauteur de remplissage est réduite dans le cycle primaire (2) du système de refroidissement du réacteur (3), notamment dans des procédés de nettoyage et de maintenance, comprenant les étapes de procédé suivantes
a) déconnexion du réacteur et déroulement d'une première phase de refroidissement et de réduction de la pression dans le cycle primaire (2) du système de refroidissement,
b) mise en service d'un système de refroidissement postérieur pour la reprise de l'évacuation de chaleur dégagée du cycle primaire (2) qui n'est plus accomplie dans cet état par l'installation génératrice de vapeur,
c) détente de pression complète et réduction de la hauteur de remplissage (10) du cycle primaire (2) environ au niveau de la moitié de la boucle de la conduite de produit réfrigérant principal ;
d) fourniture d'un réservoir à produit réfrigérant (7) pour le remplissage ultérieur nécessaire du cycle primaire (2) du réacteur et/ou du système de refroidissement postérieur,
caractérisé par les étapes de procédé suivantes :
e) raccordement du réservoir à produit réfrigérant (7) à la conduite de raccordement côté aspiration (6) du système de refroidissement postérieur au moyen d'une conduite de flux de sécurité complémentaire (15) dotée d'un robinet d'arrêt (16) et d'un robinet de retenue (17) commandé par un robinet pilote (20) ;
f) ouverture du robinet d'arrêt (16) en fonction de la réduction de la hauteur de remplissage selon l'étape c) du procédé, auquel cas
f1) lorsque le système de refroidissement du réacteur (3) est exempt de pression, en fonction des rapports de niveau géodésiques (hauteur de remplissage dans le réservoir à produit réfrigérant / hauteur de remplissage dans la conduite d'aspiration) et de la force de serrage "normale" du robinet de retenue (17) lors de la réduction de la hauteur de remplissage dans la conduite d'aspiration sous une valeur seuil pouvant être prédéterminée, sous l'ouverture du robinet de retenue (17), du produit réfrigérant s'écoule du réservoir à produit réfrigérant (7) dans la conduite d'aspiration et
f2) lorsque le vide a été fait dans le système de refroidissement du réacteur (3) pour le dégazage du produit réfrigérant, la force de serrage du robinet de retenue (17) s'élève par activation du robinet pilote (20) et est de ce fait adaptée aux rapports de pression modifiés dans le système de refroidissement du réacteur (3) où le vide a été fait.

2. Procédé selon la revendication 1, caractérisé en ce que le produit réfrigérant (8) s'écoule du réservoir de stockage d'eau boriquée à l'intérieur de l'enceinte de confinement du réacteur dans le cycle primaire (2).

3. Procédé selon la revendication 1 ou 2, caractérisé en ce que dans un système de refroidissement du réacteur (3) où le vide a été fait, l'accroissement de la force de serrage du robinet de retenue (17) se produit du fait de la pression du liquide du produit réfrigérant (8) se trouvant dans le réservoir à liquide, ladite pression agissant sur un piston de commande (22) du robinet de retenue (17).

4. Procédé selon la revendication 3, caractérisé en ce que la force de serrage du robinet de retenue (17) est déterminée essentiellement par le poids du piston de commande (22) déplaçable dans celui-ci dans le sens vertical ou par des éléments de pondération ou des éléments à ressort ainsi concourant.

5. Procédé selon l'une des revendications 3 ou 4, caractérisé en ce que lors de l'ouverture du robinet pilote (20) l'accroissement de la force de serrage du robinet de retenue (17) se produit par application d'une pression avec du produit réfrigérant (8) à un espace de commande (21).

6. Procédé selon l'une des revendications précédentes, caractérisé en ce que la force de serrage du robinet de retenue (17) est dimensionnée de manière telle qu'une ouverture du robinet de retenue (17) et un débordement de produit réfrigérant (8) à l'extérieur du réservoir à produit réfrigérant (7) se produit au moyen du robinet de retenue (17) dans le cycle du produit réfrigérant, avant que la hauteur de remplissage soit réduite jusqu'au point de liaison (VP) de la conduite de raccordement du côté d'aspiration (6) et de la conduite de flux de sécurité (15).

7. Procédé selon l'une des revendications précédentes, caractérisé en ce que le robinet d'arrêt (17) est ouvert automatiquement ou manuellement lors de la réduction, provoquée manuellement, de la hauteur de remplissage (10).

8. Procédé selon l'une des revendications précédentes, caractérisé en ce que lorsque le vide est fait dans le système de refroidissement du réacteur (3), le robinet pilote (20) est activé automatiquement ou manuellement pour accroître la force de serrage du robinet de retenue (17).

9. Dispositif (1) garantissant de bonnes conditions de sécurité lors de l'évacuation de chaleur résiduelle dégagée du réacteur d'une centrale nucléaire avec une hauteur de remplissage réduite dans le cycle primaire (2) du système de refroidissement du réacteur (3), dans lequel est prévue au moins une branche (4) d'un système de refroidissement postérieur du côté primaire, qui est raccordé au système de refroidissement du réacteur (conduite de produit réfrigérant principal 2) au moyen d'une conduite de raccordement du côté d'aspiration et est relié à un réservoir à produit réfrigérant (7) par une conduite de flux pouvant être fermée (13),
caractérisé en ce que le réservoir à produit réfrigérant (7) est relié au moyen d'une conduite de flux de sécurité supplémentaire (15) à la conduite de raccordement côté aspiration (6) du système de refroidissement postérieur, dans laquelle sont prévus un robinet d'arrêt pouvant être actionné à distance (16) et un robinet de retenue (17), et le robinet de retenue peut être activé dans deux positions de force de serrage différentes en ce qui concerne son ouverture pour le débit du produit réfrigérant du réservoir à produit réfrigérant (7) à la conduite de raccordement (6).

10. Dispositif selon la revendication 9, caractérisé en ce que le robinet d'arrêt (17) est conçu comme un robinet de retenue à piston et présente un piston de commande (22) dont l'action détermine le régime d'ouverture et de fermeture du robinet de retenue (17).

11. Dispositif selon la revendication 10, caractérisé en ce que sur le piston de commande (22) est prévu un espace de commande (21) agissant dans le sens de fermeture qui peut être alimenté en produit réfrigérant (8) par l'ouverture d'un robinet pilote (20) afin d'accroître la force de serrage du robinet de retenue (17).
